# EUROPÄISCHE PATENTANMELDUNG

(11) **EP 4 224 453 A1**
(43) Veröffentlichungstag der Anmeldung: **09.08.2023**
(21) Anmeldenummer: 23154870.2
(22) Anmeldetag: 03.02.2023
(51) Int. Cl.: G08G 1/01, G08G 1/017, G06V 20/62

(54) **VERFAHREN UND SYSTEM ZUR ERKENNUNG VON UNERLAUBTEN FAHRZEUG-ÜBERHOLVORGÄNGEN IN EINER ÜBERHOLVERBOTSZONE EINES FAHRWEGS**

(30) Priorität: 04.02.2022 DE 102022102717; 07.02.2022 DE 102022102780
(71) Anmelder: DataCollect Traffic Systems GmbH, 50170 Kerpen (DE)
(72) Erfinder: Lippoldt, Mario, 99084 Erfurt (DE)
(74) Vertreter: Patentanwälte Bauer Vorberg Kayser

(57) **Zusammenfassung**

Die Erfindung betrifft ein Verfahren und System zur Erkennung von unerlaubten Fahrzeug-Überholvorgängen in einer Überholverbotszone (1) eines Fahrwegs (2). Damit können unerlaubte Überholvorgänge zuverlässiger erkannt und zugehörige Daten unter verbesserten Datenschutzmaßgaben ausgegeben werden.

## Beschreibung

Die Erfindung betrifft ein Verfahren zur Erkennung von unerlaubten Fahrzeug-Überholvorgängen in einer Überholverbotszone eines Fahrwegs sowie ein System zur Ausführung des Verfahrens.

Überholvorgänge im Straßenverkehr stellen eine nicht zu vernachlässigende Gefahrenquelle für Unfallsituationen mit teils schweren Verletzungen oder Todesfolgen für Fahrzeuginsassen der am Überholvorgang unmittelbar oder mittelbar beteiligten Fahrzeuge dar. Verstärkt wird dies durch überhöhte Geschwindigkeiten der überholenden Fahrzeuge. Überholvorgänge sind auf Fahrwegen unterschiedlichster Art zu beobachten, gleichsam innerorts wie außerorts. Häufig erfolgen Überholvorgänge auf Fahrwegen mit mehr als einer in gleicher Richtung verlaufenden Fahrspur (zwei Spuren, drei Spuren, vier Spuren etc.). Insbesondere bei Autobahnen oder Schnellstraßen sind mehrspurige Fahrwege bekannt. Fahrwege können zudem Fahrspuren mit entgegengesetzter Fahrtrichtung aufweisen, beispielsweise kann ein Fahrweg jeweils eine Fahrspur in einer Fahrtrichtung aufweisen, gleichsam aber auch mehrere (z. B. zwei, drei, vier oder mehr Fahrspuren) in einer jeweiligen Fahrtrichtung. Unabhängig von der Anzahl der Fahrspuren, der Art des Fahrwegs (Autobahn, Schnellstraße, Landstraße, innerstädtische Straße etc.) oder des Fahrbahnuntergrunds können in besonders unfallgefährdeten oder schützenswerten Abschnitten des Fahrwegs Überholverbotszonen eingerichtet sein.

Eine Überholverbotszone meint, dass in dieser Zone die Ausführung von Überholvorgängen in Bezug auf andere Fahrzeuge grundsätzlich untersagt sind oder ein entsprechendes Überholverbot für bestimmte Fahrzeugtypen (z. B. Lastkraftwagen = LKWs) gilt. Überholverbotszonen erstrecken sich somit entlang eines Wegabschnitts eines Fahrwegs, also über eine bestimmte Länge des Fahrwegs (z. B. 500 m, 1 km oder dergleichen). Der Beginn einer Überholverbotszone (Überholverbotszonen-Anfangsbereich) kann einem Fahrzeugführer bzw. Fahrzeuginsassen beispielsweise durch eine Beschilderung, Fahrbahnmarkierung, eine (z. B. akustische oder optische) Anzeige im Fahrzeug (also ein On-Board System) oder anderweitige aus dem Stand der Technik bekannten Möglichkeiten zur Kenntlichmachung eines Überholverbotszonen-Anfangsbereichs aufgezeigt werden. Gleiches gilt für die Aufhebung der Überholverbotszone (Überholverbotszonen-Endbereich). Jener Streckenabschnitt der Überholverbotszone zwischen dem Überholverbotszonen-Anfangsbereich und dem Überholverbotszonen-Endbereich kann als Überholverbotszonen-Zwischenbereich bezeichnet werden.

In der Praxis ist es häufig problematisch, Verstöße gegen ein in einer Überholverbotszone geltendes Überholverbot zuverlässig nachzuweisen. Insbesondere in behördlichen oder gerichtlichen Streitverfahren von auf Überholverbotsvergehen bezogenen Rechtsstreitigkeiten kommt es regelmäßig zu Nachweisproblemen. Denn zum einen ist der Nachweis von Verstößen gegen Überholverbote aufgrund der oftmals von speziellen Einzelfallverkehrssituationen geprägten Überholverbotsvergehen technisch komplex, zum anderen können Überholvorgänge, die bereits vor Einfahrt in eine Überholverbotszone begonnen haben, in Bezug auf rechtliche Konsequenzen anders bewertet werden als in der Überholverbotszone einsetzende Überholmanöver. Ein weiteres Problem liegt darin, dass bei bekannten Verfahren zur Erfassung von Überholvorgängen häufig auf optische Sensorik (insbesondere Kameras) zurückgegriffen wird. Dabei kann es vorkommen, dass nebst den an einem unerlaubten Überholvorgang beteiligten Fahrzeugen auch nicht an dem Überholvorgang beteiligte Fahrzeuge miterfasst werden. Dies kann zu datenschutzrechtlichen Problemen führen.

Daher liegt der vorliegenden Erfindung die Aufgabe zugrunde, ein Verfahren und System zur Erkennung von unerlaubten Fahrzeug-Überholvorgängen in einer Überholverbotszone eines Fahrwegs anzugeben, das unerlaubte Überholvorgänge mit zuverlässiger erkennen und zugehörige Daten unter verbesserten Datenschutzmaßgaben ausgegeben werden können.

Gelöst wird diese Aufgabe durch ein Verfahren mit den Merkmalen des Anspruchs 1 oder ein System mit den Merkmalen des Anspruchs 15.

Zunächst betrifft die Erfindung ein Verfahren zur Erkennung von unerlaubten Fahrzeug-Überholvorgängen in einer Überholverbotszone eines Fahrwegs, wobei sich die Überholverbotszone entlang eines Wegabschnitts des Fahrwegs ausgehend von einem Überholverbotszonen-Anfangsbereich bis zu einem Überholverbotszonen-Endbereich erstreckt, wobei zwischen dem Überholverbotszonen-Anfangsbereich und dem Überholverbotszonen-Endbereich ein Überholverbotszonen-Zwischenbereich vorliegt, wobei ausgehend von dem Überholverbotszonen-Anfangsbereich in Richtung des Überholverbotszonen-Endbereichs entlang des Fahrwegs nacheinander eine erste optische Erfassungseinheit sowie zumindest eine zweite optische Erfassungseinheit angeordnet ist, wobei
a) mit der ersten optischen Erfassungseinheit
   a1) ein im Überholverbotszonen-Anfangsbereich stattfindendes Anfangsbereich-Überholvorgangsereignis zwischen Fahrzeugen erkannt wird, nämlich durch Erfassen von ersten Überholvorgangs-spezifischen Bilddaten durch die erste optische Erfassungseinheit und Prüfen der ersten Überholvorgangs-spezifischen Bilddaten auf tatsächliches Vorliegen des Anfangsbereich-Überholvorgangsereignisses, wobei im Falle eines bei der Prüfung festgestellten tatsächlichen Vorliegens des Anfangsbereich-Überholvorgangsereignisses die ersten Überholvorgangs-spezifischen Bilddaten und durch die erste optische Erfassungseinheit erfasste erste Fahrzeugidentifikationsdaten der Fahrzeuge gespeichert werden, oder
   a2) Überholverbotszoneneinfahrts-spezifische Bilddaten und erste Fahrzeugidentifikationsdaten sämtlicher in die Überholverbotszone einfahrender Fahrzeuge erfasst und gespeichert werden
b) mit der zumindest einen zweiten optischen Erfassungseinheit ein in dem Überholverbotszonen-Zwischenbereich stattfindendes Zwischenbereich-Überholvorgangsereignis zwischen Fahrzeugen erkannt wird, nämlich durch Erfassen von zweiten Überholvorgangs-spezifischen Bilddaten durch die zumindest eine zweite optische Erfassungseinheit und Prüfen der zweiten Überholvorgangs-spezifischen Bilddaten auf tatsächliches Vorliegen des Zwischenbereich-Überholvorgangsereignisses, wobei im Falle eines bei der Prüfung festgestellten tatsächlichen Vorliegens des Zwischenbereich-Überholvorgangsereignisses die zweiten Überholvorgangs-spezifischen Bilddaten und durch die zumindest eine zweite optische Erfassungseinheit erfasste zweite Fahrzeugidentifikationsdaten der Fahrzeuge gespeichert werden;
   wobei sodann gemäß einer ersten Verfahrensvariante folgende Schritte ausgeführt werden:
c) auf Basis der in Schritt a1) und b) gespeicherten Daten: Feststellen ob bei dem Anfangsbereich-Überholvorgangsereignis und dem Zwischenbereich-Überholvorgangsereignis dieselben oder verschiedene Fahrzeuge beteiligt waren;
d) im Falle einer Beteiligung verschiedener Fahrzeuge am Anfangsbereich-Überholvorgangsereignis und Zwischenbereich-Überholvorgangsereignis: Bereitstellen zumindest der zweiten Überholvorgangs-spezifischen Bilddaten und zumindest der zweiten Fahrzeugidentifikationsdaten zum Datenzugriff durch einen datenzugriffsberechtigen Nutzer und/oder Ausgeben eines Datenreports umfassend die bereitgestellten Daten;
   oder wobei gemäß einer zweiten Verfahrensvariante anstelle der Schritte c) und d) folgende Schritte ausgeführt werden:
e) auf Basis der gemäß b) gespeicherten zweiten Überholvorgangs-spezifischen Bilddaten und der zweiten Fahrzeugidentifikationsdaten: Auswählen von gemäß a1) gespeicherten Überholverbotszoneneinfahrts-spezifischen Bilddaten und/oder ersten Fahrzeugidentifikationsdaten in Bezug auf zumindest ein Fahrzeug, welches gemäß b) als an dem Zwischenbereich-Überholvorgangsereignis beteiligt erkannt wurde,
f) Bereitstellen der gemäß e) ausgewählten Überholverbotszoneneinfahrts-spezifischen Bilddaten und/oder der ausgewählten ersten Fahrzeugidentifikationsdaten sowie der gemäß b) gespeicherten zweiten Überholvorgangs-spezifischen Bilddaten und der zweiten Fahrzeugidentifikationsdaten zum Datenzugriff durch einen datenzugriffsberechtigten Nutzer und/oder zur Ausgabe eines Datenreports umfassend die bereitgestellten Daten.

Die eingangs erwähnten Begriffserläuterungen beispielsweise betreffend einen "Fahrweg", eine "Überholverbotszone", einen "Überholverbotszonen-Anfangsbereich", einen "Überholverbotszonen-Endbereich", einen "Überholverbotszonen-Zwischenbereich" und alle weiteren Angaben können auch zur Erläuterung oder Spezifizierung des mit der Erfindung vorgeschlagenen Verfahrens bzw. Systems herangezogen werden.

Ersichtlich umfasst das mit der Erfindung vorgeschlagene Verfahren zwei Verfahrensvarianten, die nachfolgend näher beschrieben seien.

Wie erwähnt handelt es sich um ein Verfahren zur Erkennung von unerlaubten Fahrzeug-Überholvorgängen in einer Überholverbotszone eines Fahrwegs. Dies meint, dass Überholvorgänge für bestimmte Fahrzeugtypen (z. B. LKWs) oder sämtliche Fahrzeuge in dieser Überholverbotszone gesetzlich verboten sind. Die Überholverbotszone kann sich bei mehrspurigen Fahrwegen auf einzelne oder mehrere Fahrspuren beziehen. Bei entgegengerichteten Fahrspuren eines Fahrwegs (also entgegengerichteten Fahrtrichtungen) kann sich eine Überholverbotszone auf einzelne oder mehrere Fahrspuren einer der Fahrtrichtungen oder beider Fahrtrichtungen beziehen. Die Überholverbotszone erstreckt sich entlang eines Wegabschnitts des Fahrwegs ausgehend von einem Überholverbotszonen-Anfangsbereich bis zu einem Überholverbotszonen-Endbereich, wobei zwischen dem Überholverbotszonen-Anfangsbereich und dem Überholverbotszonen-Endbereich ein Überholverbotszonen-Zwischenbereich vorliegt. Der Überholverbotszonen-Zwischenbereich stellt die eigentliche Überholverbotszone bereit. Der Überholverbotszonen-Anfangsbereich und Überholverbotszonen-Endbereich können zum Beispiel mit einer entsprechenden Beschilderung oder Fahrbahnmarkierung kenntlich gemacht sein.

Ausgehend von dem Überholverbotszonen-Anfangsbereich in Richtung des Überholverbotszonen-Endbereichs ist entlang des Fahrwegs nacheinander eine erste optische Erfassungseinheit sowie zumindest eine zweite optische Erfassungseinheit angeordnet. Die erste optische Erfassungseinheit und/oder die zumindest eine zweite optische Erfassungseinheit können seitlich oder oberhalb des Fahrwegs angeordnet sein. Eine Anordnung oberhalb des Fahrwegs kann beispielsweise durch eine teilweise oder vollständig über den Fahrweg ragende Tragkonstruktion wie ein Gerüst, eine Traverse oder dergleichen ermöglicht werden, wobei sodann die jeweiligen optische Erfassungseinheiten an der Tragkonstruktion montiert werden. An der Tragkonstruktion können eine oder mehrere optische Erfassungseinheiten angeordnet (montiert sein), die eine oder verschiedene Fahrbahnen und/oder Fahrtrichtungen messtechnisch erfassen können. Die erwähnte Tragkonstruktion kann auch eine über den Fahrweg geführte Brücke sein. Auch kann vorgesehen sein, die optischen Erfassungseinheiten an geeigneten Masten anzuordnen, wobei die Masten seitlich des Fahrwegs angeordnet sein können.

Handelt es sich beispielsweise um einen mehrspurigen Fahrweg, so kann bei einer seitlich des Fahrwegs vorgesehenen Anordnung der optischen Erfassungseinheiten vorteilhaft sein, beidseitig des Fahrwegs auf gleicher Höhe (in Bezug auf eine Position entlang des Überholverbotszonen-Zwischenabschnitts) jeweils eine optische Messeinheit anzuordnen, die gemeinsam die erste respektive die zumindest eine zweite optische Erfassungseinheit bilden. Bei einer Anordnung an einer Tragkonstruktion können ebenfalls mehrere optische Messeinheiten angeordnet sein, die gemeinsam die erste respektive die zumindest eine zweite optische Erfassungseinheit bilden, wobei den jeweiligen optischen Messeinheiten jeweils eine oder mehrere Fahrspuren des mehrspurigen Fahrwegs zur messtechnischen Erfassung zugeordnet sein können. Letztlich kommt jede beliebige Anordnung der optischen Erfassungseinheiten oder die optischen Erfassungseinheiten bildender optischer Messeinheiten in Betracht, die eine optische Datenerfassung von Fahrzeugen sämtlicher oder gewünschter Fahrspuren eines Fahrwegs ermöglicht. Bilden eine Mehrzahl von optischen Messeinheiten die erste respektive zumindest eine zweite optische Erfassungseinheit aus, so können diese optischen Messeinheiten signalverarbeitungstechnisch bzw. steuerungstechnisch miteinander verbunden und synchronisiert sein.

Die erste optische Erfassungseinheit (einschließlich von optional vorgesehenen mehreren optischen Messeinheiten, welche die erste optische Erfassungseinheit bilden) ist zur Ausführung des Verfahrens nach der ersten Verfahrensvariante derart angeordnet, dass ein im Überholverbotszonen-Anfangsbereich stattfindendes Anfangsbereich-Überholvorgangsereignis zwischen Fahrzeugen erkannt werden kann. Zur Ausführung des Verfahrens nach der zweiten Verfahrensvariante ist die erste optische Erfassungseinheit (einschließlich von optional vorgesehenen mehreren optischen Messeinheiten, welche die erste optische Erfassungseinheit bilden) derart angeordnet, dass Überholverbotszoneneinfahrts-spezifische Bilddaten und erste Fahrzeugidentifikationsdaten sämtlicher in die Überholverbotszone einfahrender Fahrzeuge erfasst werden können. Vorteilhaft ist dazu eine Anordnung der ersten optischen Erfassungseinheit die gewährleistet, dass sämtliche auf den gegebenenfalls mehreren Fahrspuren des Fahrwegs fahrende Fahrzeuge messtechnisch erfasst werden können (sei es durch eine einzelne erste optische Erfassungseinheit oder durch mehrere optische Messeinheiten, die die erste optische Erfassungseinheit bilden).

In vorteilhafter Weise ist die erste optische Erfassungseinheit in Nähe des Überholverbotszonen-Anfangsbereich angeordnet (also beabstandet dazu), beispielsweise in einer Distanz von 1 m bis 50 m, insbesondere 5 m bis 50 m, insbesondere 20 m bis 50 m, insbesondere 30 m bis 50 m, insbesondere 40 m bis 50 m. Auch kann eine Anordnung der ersten optischen Erfassungseinheit in einer Distanz von von 1 m bis 40 m, insbesondere 5 m bis 40 m, insbesondere 20 m bis 40 m, insbesondere 30 m bis 40 m vorgesehen sein. Auch kann eine Anordnung der ersten optischen Erfassungseinheit in einer Distanz von von 1 m bis 30 m, insbesondere 5 m bis 30 m, insbesondere 20 m bis 30 m vorgesehen sein. Auch kann eine Anordnung der ersten optischen Erfassungseinheit in einer Distanz von von 1 m bis 20 m, insbesondere 5 m bis 20 m, insbesondere 10 m bis 20 m vorgesehen sein. Auch kann eine Anordnung der ersten optischen Erfassungseinheit in einer Distanz von von 1 m bis 10 m, insbesondere 5 m bis 10 m vorgesehen sein. Auch eine Anordnung in einer spezifischen Distanz von 1 m, 2 m, 3m, 4 m, 5 m, 6 m, 7 m, 8 m, 9 m, 10 m, usw. kann vorteilhaft sein. Das vorgeschlagene Verfahren bzw. System erlaubt eine an die konkret vorliegenden Verkehrswegverhältnisse oder Erkennungsaufgabe anpassbare adäquate Positionierung der ersten optischen Erfassungseinheit. Dies gilt sowohl für die Distanz zum Überholverbotszonen-Anfangsbereich wie auch in Bezug auf die Anordnung der ersten optischen Erfassungseinheit (oder zugehöriger optischer Messeinheiten) in Bezug auf den Fahrweg (Anordnung seitlich, z. B. links oder rechts des Fahrwegs oder oberhalb des Fahrwegs). Auch die Positionierung der zumindest einen zweiten optischen Erfassungseinheit ist an die konkret vorliegenden Verkehrswegverhältnisse oder eine vorliegende Erkennungsaufgabe adäquat anpassbar.

Dabei ist die erste optische Erfassungseinheit vorzugsweise bezogen auf die Erstreckung der Überholverbotszone im Bereich des Überholverbotszonen-Zwischenabschnitts angeordnet (seitlich oder oberhalb des Fahrwegs), also in einer Distanz zum Überholverbotszonen-Anfangsbereich. Gegebenenfalls kann die erste optische Erfassungseinheit auch - bezogen auf die Fahrtrichtung - in einer Distanz vorgelagert zum Überholverbotszonen-Anfangsbereich angeordnet sein. Fährt ein Fahrzeug in den Überholverbotszonen-Anfangsbereich ein, so würde das Fahrzeug bei einer vorgelagert zum Überholverbotszonen-Anfangsbereich angeordneten ersten optische Erfassungseinheit diese erste optische Erfassungseinheit vor Einfahrt in die Überholverbotszone bzw. vor dem Passieren des Überholverbotszonen-Anfangsbereich passieren. Die optische Erfassungseinheit kann durch rückwärtige Erfassung (also durch Aufnahme der Fahrzeuge von hinten, z. B. der Heckseiten) der Fahrzeuge die erwähnten ersten Überholvorgangs-spezifischen Bilddaten, die ersten Fahrzeugidentifikationsdaten, und/oder Überholverbotszoneneinfahrts-spezifische Bilddaten erfassen. Ist die erste optische Erfassungseinheit bezogen auf die Erstreckung der Überholverbotszone im Bereich des Überholverbotszonen-Zwischenabschnitts angeordnet, so passiert ein in die Überholverbotszone einfahrendes Fahrzeug zunächst den Überholverbotszonen-Anfangsbereich und erst anschließend die erste optische Erfassungseinheit.

Wie erwähnt, ist ausgehend von dem Überholverbotszonen-Anfangsbereich in Richtung des Überholverbotszonen-Endbereichs entlang des Fahrwegs nachgeordnet zur ersten optischen Erfassungseinheit zumindest eine zweite optische Erfassungseinheit angeordnet. Dies meint, dass ein über den Überholverbotszonen-Anfangsbereich in die Überholverbotszone einfahrendes Fahrzeug zunächst die erste optische Erfassungseinheit passiert und erst danach die zumindest eine zweite optische Erfassungseinheit. Entlang des Überholverbotszonen-Zwischenabschnitts können mehrere zweite optische Erfassungseinheiten angeordnet sein (impliziert durch den Terminus "zumindest eine" zweite optische Erfassungseinheit). Eine hintereinander vorgesehene Anordnung von mehreren (beabstandet zueinander angeordneten) zweiten optischen Erfassungseinheiten entlang des Zwischenabschnitts kann vorteilhaft sein, um insbesondere bei sich über eine längere Strecke erstreckenden Überholverbotszonen eine zuverlässige Erfassung von Überholvorgängen bzw. der daran beteiligten Fahrzeuge zu ermöglichen oder um eine hohe Erkennungssicherheit bei beliebiger Länge der Überholverbotszone sicherzustellen. Auch in Bezug auf die hier genannten mehreren zweiten optischen Erfassungseinheiten sei betont, dass eine jeweilige der zweiten optischen Erfassungseinheiten mehrere optische Messeinheiten umfassen kann (beispielsweise rechtsseitig und linksseitig des Fahrwegs auf gleicher Höhe oder oberhalb des Fahrwegs an einer Tragkonstruktion angeordnete optische Messeinheiten). Auch kann eine jeweilige zweite optische Erfassungseinheit singulär ausgebildet sein, d.h. nur eine einzige optische Messeinheit umfassen, die zugleich die zweite optische Erfassungseinheit bildet. Im diesem Fall kann selbstverständlich auch eine einzelne zweite optische Erfassungseinheit neben dem Fahrweg, also links oder rechts des Fahrwegs oder auch oberhalb des Fahrwegs angeordnet sein.

Unter einer "optischen" Erfassungseinheit kann grundsätzlich jegliche Erfassungseinheit verstanden werden, die eine Erfassung optisch wahrnehmbarer Informationen erlaubt und/oder auf einem optischen Messverfahren beruht. Die Erfindung ist dabei nicht auf ein bestimmtes Messprinzip beschränkt. Vorstellbar ist, dass es sich bei einer "optischen" Erfassungseinheit (unabhängig davon ob es sich dabei um die erste oder zweite optische Erfassungseinheit handelt) um eine Kamera, eine 3D-Kamera, eine Infrarotkamera, einen Radarsensor, einen Lidarsensor, einen Lasersensor oder dergleichen handeln.

Die erste und/oder die zumindest eine zweite optische Erfassungseinheit können jeweils eine Datenverarbeitungseinheit aufweisen oder mit einer solchen datenkommunikationstechnisch verbunden sein. In jenem Falle, dass die erste und/oder die zumindest eine zweite optische Erfassungseinheit von jeweils mehreren optischen Messeinheiten gebildet sind, können diese optischen Messeinheiten mit einer der jeweiligen ersten und/oder zweiten optischen Erfassungseinheit zugeordneten Datenverarbeitungseinheit datenkommunikationstechnisch verbunden sein. Die erwähnten optischen Messeinheiten können zudem eigene Datenverarbeitungseinheiten aufweisen. In der Datenverarbeitungseinheit können von den optischen Erfassungseinheiten bzw. optischen Messeinheiten aufgenommene Daten prozessiert, verarbeitet und ausgewertet werden. Es kann auch vorgesehen sein, dass die erste optische Erfassungseinheit (einschließlich etwaiger zugehöriger optischer Messeinheiten, welche die erste optische Erfassungseinheit bilden) und die zumindest eine, ggf. alle, zweite optische Erfassungseinheit(en) (einschließlich etwaiger zugehöriger optischer Messeinheiten, welche die zweite optische Erfassungseinheit bilden) eine gemeinsame zentrale Datenverarbeitungseinheit aufweisen und mit dieser datenkommunikationstechnisch verbunden sind. Eine datenkommunikationstechnische Verbindung kann kabelgebunden oder kabellos ausgestaltet sein.

Gemäß einer ersten Variante des mit der Erfindung vorgeschlagenen Verfahrens wird mit der ersten optischen Erfassungseinheit der vorangehend mit a1) bezeichnete Schritt ausgeführt. Ferner wird mit der zumindest einen zweiten optischen Erfassungseinheit Schritt b) ausgeführt. Sodann folgen die Schritte c) und d).

Gemäß a1) wird somit mit der ersten optischen Erfassungseinheit ein im Überholverbotszonen-Anfangsbereich stattfindendes Anfangsbereich-Überholvorgangsereignis zwischen Fahrzeugen (z. B. zwischen einem überholenden Fahrzeug und einem überholten Fahrzeug) erkannt, nämlich durch Erfassen von ersten Überholvorgangs-spezifischen Bilddaten durch die erste optische Erfassungseinheit und Prüfen der ersten Überholvorgangs-spezifischen Bilddaten auf tatsächliches Vorliegen des Anfangsbereich-Überholvorgangsereignisses, wobei im Falle eines bei der Prüfung festgestellten tatsächlichen Vorliegens des Anfangsbereich-Überholvorgangsereignisses die ersten Überholvorgangs-spezifischen Bilddaten und durch die erste optische Erfassungseinheit erfasste erste Fahrzeugidentifikationsdaten der Fahrzeuge gespeichert werden. Bei den Bilddaten kann es sich insbesondere um optische Wiedergaben der Fahrzeuge bei dem im Überholverbotszonen-Anfangsbereich stattfindenden Anfangsbereich-Überholvorgangsereignis, insbesondere Bilder oder Bewegtbilder (Filme, Videos), handeln. Diese können farbig, in Graustufen oder schwarz-weiß aufgenommen und gespeichert werden. Anhand von vorgebbaren Prüfkriterien kann anhand der ersten Überholvorgangs-spezifischen Bilddaten das tatsächliche Vorliegen eines Anfangsbereich-Überholvorgangsereignis festgestellt werden. Die Prüfkriterien können anhand einer Software, einer Routine, eines Algorithmus (auch KI basiert) in Bezug auf die ersten Überholvorgangs-spezifischen Bilddaten geprüft werden. Prüfkriterien können beispielsweise bestimmte Positionen oder Abstände von Fahrzeugen auf dem überwachten Fahrweg und/oder relativ zueinander sein. Auch die Erkennung eines überholenden Fahrzeugs auf einer anderen Spur (z. B. Überholspur, Mittelspur, Gegenfahrbahn) als das überholte Fahrzeug, gegebenenfalls in Verbindung mit erfassten Geschwindigkeits- oder Beschleunigungsdaten beider Fahrzeuge kann ein Indikator für das Vorliegen eines Anfangsbereich-Überholvorgangsereignis sein. Ein überholendes Fahrzeug kann dabei eine höhere Geschwindigkeit oder Beschleunigung aufweisen als das überholte Fahrzeug. Diese Informationen können anhand der ersten Überholvorgangs-spezifischen Bilddaten geprüft werden. Auch vorgebbare Bewegungsmuster können derartige Prüfkriterien bereitstellen. Ferner können - wie erwähnt - auch zusätzlich mit der ersten optischen Erfassungseinheit oder einer weiteren Erfassungseinheit aufgenommene Geschwindigkeits- oder Beschleunigungsinformationen der erfassten Fahrzeuge hilfreiche Kriterien zur Feststellung des Vorliegens eines Anfangsbereich-Überholvorgangsereignis darstellen. Es ist zudem vorstellbar, Geschwindigkeits- und Beschleunigungsdaten aus den ersten Überholvorgangs-spezifischen Bilddaten zu erhalten bzw. abzuleiten. Die ersten Überholvorgangs-spezifischen Bilddaten können - in jenem Falle der Ausbildung der ersten optischen Erfassungseinheit durch mehrere optische Messeinheiten - durch jeweils von den optischen Messeinheiten erfasste einzelne Bilddaten (z. B. Bilder, Bewegtbilder) erhalten werden. Dazu können die von den optischen Messeinheiten erfassten Bilddaten zu einem gemeinsamen Bilddatensatz zusammengesetzt werden. Geschwindigkeits- und Beschleunigungsdaten der am Anfangsbereich-Überholvorgangsereignis beteiligten Fahrzeuge können auch anhand der von den optischen Messeinheiten (welche die erste optische Erfassungseinheit bilden können) erfasst oder anhand der damit aufgenommenen Bilddaten ermittelt werden. Die Prüfung und Feststellung des Vorliegens eines Anfangsbereich-Überholvorgangsereignisses wird in einer Datenverarbeitungseinheit durchgeführt, die der ersten optischen Erfassungseinheit zugehörig oder mit dieser datenkommunikationstechnisch verbunden ist. Auch kann dies oder eine Vorprozessierung in den optischen Messeinheiten zugeordneten Datenverarbeitungseinheiten erfolgen.

Die ersten Fahrzeugidentifikationsdaten der Fahrzeuge werden - wie erwähnt - ebenfalls von der ersten optischen Erfassungseinheit erfasst. Unter einer diesbezüglichen "Erfassung" kann zu verstehen sein, dass die Fahrzeugidentifikationsdaten aus den erfassten ersten Überholvorgangs-spezifischen Bilddaten ermittelt werden oder messtechnisch separat erfasst werden. Bei Ermittlung der Fahrzeugidentifikationsdaten aus den erfassten ersten Überholvorgangs-spezifischen Bilddaten werden die ersten Überholvorgangs-spezifischen Bilddaten und die ersten Fahrzeugidentifikationsdaten somit gemeinsam erfasst.

Das Speichern erfolgt in einer Speichereinheit, die der ersten optischen Erfassungseinheit zugehörig, oder mit dieser und/oder der Datenverarbeitungseinheit datenkommunikationstechnisch verbunden ist. Die Speichereinheit und/oder die Datenverarbeitungseinheit(en) können körperlich mit der ersten optischen Erfassungseinheit verbunden sein (z. B. bei Anordnung in einem gemeinsamen Gehäuse), gleichwohl aber auch extern dazu (z. B. in einem Rechenzentrum oder einer Analysebox am Fahrweg).

Ein im Überholverbotszonen-Anfangsbereich stattfindendes Anfangsbereich-Überholvorgangsereignis stellt insbesondere auf einen Überholvorgang zwischen Fahrzeugen (z. B. zwei Fahrzeugen) ab, der beim Einfahren in die Überholverbotszone, also beim Passieren des Überholverbotszonen-Anfangsbereichs (z. B. einer Beschilderung), bereits im Gange war. Der Überholvorgang kann dabei mit der ersten optischen Erfassungseinheit anhand von ersten Überholvorgangs-spezifischen Bilddaten (z. B. einem oder mehrerer Bilder oder Videos der am Überholvorgang beteiligten Fahrzeuge) erfasst und sodann festgestellt (erkannt) werden. Zur Feststellung des Vorliegens eines ersten Überholvorgangs-spezifischen Ereignisses können auch Geschwindigkeits- und/oder Beschleunigungsdaten von Fahrzeugen erfasst bzw. analysiert werden.

Es versteht sich von selbst, dass mit der ersten optischen Erfassungseinheit auch Bilddaten, Geschwindigkeits- und/oder Beschleunigungsdaten von Fahrzeugen erfasst und/oder ausgewertet werden, die nicht an einem Anfangsbereich-Überholvorgangsbereichsereignis beteiligt sind. Bei der ersten Verfahrensvariante können diese Daten unmittelbar nach Feststellung eines Nichtvorliegens eines Anfangsbereich-Überholvorgangsereignis verworfen werden. Jedoch kann auch in diesem Falle eine temporäre Speicherung der Daten in der bezeichneten Speichereinheit vorgesehen sein.

Gemäß b1) wird mit der zumindest einen zweiten optischen Erfassungseinheit ein im Überholverbotszonen-Zwischenbereich stattfindendes Zwischenbereich-Überholvorgangsereignis zwischen Fahrzeugen (z. B. zwischen einem überholenden Fahrzeug und einem überholten Fahrzeug) erkannt, nämlich durch Erfassen von zweiten Überholvorgangs-spezifischen Bilddaten durch die zumindest eine optische Erfassungseinheit und Prüfen der zweiten Überholvorgangs-spezifischen Bilddaten auf tatsächliches Vorliegen des Zwischenbereich-Überholvorgangsereignisses, wobei im Falle eines bei der Prüfung festgestellten tatsächlichen Vorliegens des Zwischenbereich-Überholvorgangsereignisses die zweiten Überholvorgangs-spezifischen Bilddaten und durch die zumindest eine zweite optische Erfassungseinheit erfasste zweite Fahrzeugidentifikationsdaten der Fahrzeuge gespeichert werden. Bei den Bilddaten kann es sich insbesondere um optische Wiedergaben der Fahrzeuge bei dem im Überholverbotszonen-Zwischenbereich stattfindenden Zwischenbereich-Überholvorgangsereignis, insbesondere Bilder oder Bewegtbilder (Filme, Videos), handeln. Diese können farbig, in Graustufen oder schwarz-weiß aufgenommen und gespeichert werden. Anhand von vorgebbaren Prüfkriterien kann anhand der zweiten Überholvorgangs-spezifischen Bilddaten das tatsächliche Vorliegen eines Zwischenbereich-Überholvorgangsereignis festgestellt werden. Die Prüfkriterien können anhand einer Software, einer Routine, eines Algorithmus (auch KI basiert) in Bezug auf die zweiten Überholvorgangs-spezifischen Bilddaten geprüft werden. Prüfkriterien können beispielsweise bestimmte Positionen oder Abstände von Fahrzeugen auf dem überwachten Fahrweg und/oder relativ zueinander sein. Auch die Erkennung eines überholenden Fahrzeugs auf einer anderen Spur (z. B. Überholspur, Mittelspur, Gegenfahrbahn) als das überholte Fahrzeug, gegebenenfalls in Verbindung mit erfassten Geschwindigkeits- oder Beschleunigungsdaten beider Fahrzeuge kann ein Indikator für das Vorliegen eines Zwischenbereich-Überholvorgangsereignisses sein. Ein überholendes Fahrzeug kann dabei eine höhere Geschwindigkeit oder Beschleunigung aufweisen als das überholte Fahrzeug. Diese Informationen können anhand der zweiten Überholvorgangs-spezifischen Bilddaten geprüft werden. Auch vorgebbare Bewegungsmuster können derartige Prüfkriterien bereitstellen. Ferner können - wie erwähnt - auch zusätzlich mit der zumindest einen zweiten optischen Erfassungseinheit oder einer weiteren Erfassungseinheit aufgenommene Geschwindigkeits- oder Beschleunigungsinformationen der erfassten Fahrzeuge hilfreiche Kriterien zur Feststellung des Vorliegens eines Zwischenbereich-Überholvorgangsereignisses darstellen. Es ist zudem vorstellbar, Geschwindigkeits- und Beschleunigungsdaten aus den zweiten Überholvorgangs-spezifischen Bilddaten zu erhalten bzw. abzuleiten. Die zweiten Überholvorgangs-spezifischen Bilddaten können - in jenem Falle der Ausbildung der zumindest einen zweiten optischen Erfassungseinheit durch mehrere optische Messeinheiten - durch jeweils von den optischen Messeinheiten erfasste einzelne Bilddaten (z. B. Bilder, Bewegtbilder) erhalten werden. Dazu können die von den optischen Messeinheiten erfassten Bilddaten zu einem gemeinsamen Bilddatensatz zusammengesetzt werden. Geschwindigkeits- und Beschleunigungsdaten der am Zwischenbereich-Überholvorgangsereignis beteiligten Fahrzeuge können auch anhand der von den optischen Messeinheiten (welche die zumindest eine zweite optische Erfassungseinheit bilden können) erfasst oder anhand der damit aufgenommenen Bilddaten ermittelt werden. Die Prüfung und Feststellung des Vorliegens eines Zwischenbereich-Überholvorgangsereignisses wird in einer Datenverarbeitungseinheit durchgeführt, die der zumindest einen zweiten optischen Erfassungseinheit zugehörig oder mit dieser datenkommunikationstechnisch verbunden ist. Auch kann dies oder eine Vorprozessierung in den optischen Messeinheiten zugeordneten Datenverarbeitungseinheiten erfolgen. Im Falle mehrerer zweiter optischer Erfassungseinheiten, die entlang des Wegabschnittes im Überholverbotszonen-Zwischenbereich angeordnet sind, können diese einer gemeinsamen Datenverarbeitungseinheit zugeordnet sein, oder jeweils einer separaten Datenverarbeitungseinheit. Der ersten optischen Erfassungseinheit und der zumindest einen (wie auch mehreren) zweiten optischen Erfassungseinheit(en) kann eine gemeinsame Datenverarbeitungseinheit zugeordnet sein. Sodann ist die erste optische Erfassungseinheit sowie die zumindest eine (oder mehreren) zweite(n) optische(n) Erfassungseinheit(en) datenkommunikationstechnisch mit der Datenverarbeitungseinheit verbunden.

Die zweiten Fahrzeugidentifikationsdaten der Fahrzeuge werden - wie erwähnt - ebenfalls von der zumindest einen zweiten optischen Erfassungseinheit erfasst. Unter einer diesbezüglichen "Erfassung" kann zu verstehen sein, dass die Fahrzeugidentifikationsdaten aus den erfassten zweiten Überholvorgangs-spezifischen Bilddaten ermittelt werden oder messtechnisch separat erfasst werden. Bei Ermittlung der Fahrzeugidentifikationsdaten aus den erfassten zweiten Überholvorgangs-spezifischen Bilddaten werden die zweiten Überholvorgangs-spezifischen Bilddaten und die zweiten Fahrzeugidentifikationsdaten somit gemeinsam erfasst.

Entlang des Zwischenabschnitts können mehrere zweite optische Erfassungseinheiten angeordnet bzw. verteilt sein. Denn ein unerlaubter Überholvorgang kann an unterschiedlichen Stellen des Zwischenabschnitts der Überholverbotszone erfolgen. Die bezeichnete Anordnung bzw. Verteilung mehrerer zweiter optischer Erfassungseinheiten ermöglicht somit eine zuverlässige Erkennung von Zwischenbereich-Überholvorgangsereignissen an unterschiedlichen Stellen des Zwischenabschnitts.

In einem Schritt c) wird auf Basis der in Schritt a1) und b) gespeicherten Daten festgestellt, ob bei dem Anfangsbereich-Überholvorgangsereignis und dem Zwischenbereich-Überholvorgangsereignis dieselben oder verschiedene Fahrzeuge beteiligt waren. Dies kann mittels einer Software, einer Routine, eines Algorithmus (auch auf Basis von künstlicher Intelligenz = KI) unter Einsatz einer Datenverarbeitungseinheit durchgeführt werden. Insbesondere kann vorgesehen sein, die ersten und zweiten Fahrzeugidentifikationsdaten abzugleichen, um festzustellen, ob dieselben oder verschiedene Fahrzeuge bei dem Anfangsbereich-Überholvorgangsereignis und dem Zwischenbereich-Überholvorgangsereignis beteiligt waren. Dies kann zusätzlich oder alternativ auf Basis von anderen charakteristischen Fahrzeugmerkmalen (Farbe, Fahrzeugtyp, Fahrzeugform, Fahrzeugsilhouette etc.) geprüft werden.

In einem Schritt d) werden im Falle einer Beteiligung verschiedener Fahrzeuge am Anfangsbereich-Überholvorgangsereignis und Zwischenbereich-Überholvorgangsereignis zumindest die zweiten Überholvorgangs-spezifischen Bilddaten und zumindest die zweiten Fahrzeugidentifikationsdaten zum Datenzugriff durch einen datenzugriffsberechtigen Nutzer bereitgestellt und/oder es wird eines Datenreport umfassend die bereitgestellten Daten ausgegeben. Auch der Datenreport kann an einen zugriffsberechtigten Nutzer ausgegeben werden. Der Datenreport kann als Beweismittel vor Gericht oder Behörden in Fragen von Verkehrsvergehen dienen.

Mit der ersten Verfahrensvariante lässt sich somit überprüfen, ob an dem Zwischenbereich-Überholvorgangsereignis Fahrzeuge beteiligt sind, sich schon bei Einfahrt in die Überholverbotszone in einem Überholmanöver befanden, also an dem Anfangsbereich-Überholvorgangsereignis beteiligt waren. Dies kann in Bezug auf mögliche rechtliche Konsequenzen anders bewertet werden als jener Fall, bei dem ein Fahrzeug erst in der Überholverbotszone (also im Überholverbotszonen-Zwischenbereich) einen Überholvorgang einleitet. Entsprechend ist die Bereitstellung derartiger Informationen oder Daten an Rechtsorgane oder Behörden (diese können einen datenzugriffsberechtigte Nutzer darstellen) zur adäquaten Bewertung von verkehrsrechtlichen Vergehen (wie dem unerlaubten Überholen in einer Überholverbotszone) von hoher Relevanz.

Gemäß einer zweiten Variante des mit der Erfindung vorgeschlagenen Verfahrens wird mit der ersten optischen Erfassungseinheit der vorangehend mit a2) bezeichnete Schritt ausgeführt. Ferner wird mit der zumindest einen zweiten optischen Erfassungseinheit Schritt b) ausgeführt. Sodann folgen die Schritte e) und f) anstelle von c) und d).

Die erste optische Erfassungseinheit erfasst im Unterschied zur ersten Variante Überholverbotszoneneinfahrts-spezifische Bilddaten und erste Fahrzeugidentifikationsdaten sämtlicher in die Überholverbotszone einfahrender Fahrzeuge und speichert diese (zumindest temporär).

Bei der zweiten Variante werden anstelle der Schritte c) und d) die Schritte e) und f) ausgeführt.

Schritt e) betrifft auf Basis der gemäß b) gespeicherten zweiten Überholvorgangs-spezifischen Bilddaten und der zweiten Fahrzeugidentifikationsdaten: Auswählen von gemäß a2) gespeicherten Überholverbotszoneneinfahrts-spezifischen Bilddaten und/oder ersten Fahrzeugidentifikationsdaten in Bezug auf zumindest ein Fahrzeug, welches gemäß b) als an dem Zwischenbereich-Überholvorgangsereignis (11) beteiligt erkannt wurde. Kurzum werden Daten aus Schritt a2) nach einer Erkennung einer Beteiligung eines Fahrzeugs an einem Überholmanöver (überholtes oder überholendes Fahrzeug) im Schritt b) ausgewählt. Im Schritt a2) erfolgt noch keine Erkennung in Bezug auf ein mögliches Überholmanöver.

Schritt f) betrifft ein Bereitstellen der gemäß e) ausgewählten Überholverbotszoneneinfahrts-spezifischen Bilddaten und/oder der ausgewählten ersten Fahrzeugidentifikationsdaten sowie der gemäß b) gespeicherten zweiten Überholvorgangs-spezifischen Bilddaten und der zweiten Fahrzeugidentifikationsdaten zum Datenzugriff durch einen datenzugriffsberechtigten Nutzer und/oder zur Ausgabe eines Datenreports umfassend die bereitgestellten Daten. Gerichtlich oder behördlich kann dann festgestellt werden, ob ein an einem Zwischen-Überholvorgangsereignis beteiligtes Fahrzeug bereits an einem Anfangsbereich-Überholvorgangsereignis beteiligt war oder nicht. Bei dieser Variante ist es somit nicht erforderlich im Schritt a) eine Erkennung eines Anfangsbereich-Überholvorgangsereignisses durchzuführen. Dies vermindert gegebenenfalls den Auswertungsaufwand bzw. verschiebt dienen in eine gerichtliche oder behördliche Folgeinstanz.

Mit der zweiten Verfahrensvariante lässt sich in Analogie zur ersten Verfahrensvariante erkennen, ob im Überholverbotszonen-Zwischenbereich, also zwischen dem Überholverbotszonen-Anfangsbereich und dem Überholverbotszonen-Endbereich ein Zwischenbereich-Überholvorgangsereignis vorliegt. Beispielsweise kann somit erkannt werden, wenn ein Fahrzeug ein anderes Fahrzeug in diesem Zwischenbereich überholt. Dabei kann das überholende Fahrzeug das zu überholende Fahrzeug überholen, indem es seine Geschwindigkeit erhöht, auf eine andere Fahrspur oder eine Gegenfahrspur wechselt und an dem zu überholenden Fahrzeug mit höherer Geschwindigkeit vorbeifährt. Im Anschluss daran kann das überholende Fahrzeug wieder auf die ursprüngliche Fahrbahn zurückkehren oder auf der beim Überholvorgang genutzten Fahrbahn verbleiben. Im Unterschied zur ersten Verfahrensvariante wird bei der zweiten Verfahrensvariante von der ersten optischen Erfassungseinheit aber kein Anfangsbereich-Überholvorgangsereignis erkannt, sondern es werden sämtliche in die Überholverbotszone einfahrende Fahrzeuge in Bezug auf Überholverbotszoneneinfahrts-spezifische Bilddaten und Fahrzeugidentifikationsdaten erfasst. Dies kann bedeuten, dass von sämtlichen in die Überholverbotszone einfahrenden Fahrzeugen mittels der ersten optischen Erfassungseinheit Bilder oder Bewegtbilder aufgenommen werden (Überholverbotszoneneinfahrts-spezifische Bilddaten). Ferner können zusätzlich erste Fahrzeugidentifikationsdaten dieser Fahrzeuge erfasst werden. Nach einer zweiten Verfahrensvariante erfolgt zunächst auf Basis der Überholverbotszoneneinfahrts-spezifische Bilddaten zunächst keine automatisierte Erkennung in Bezug auf das Vorliegen eines Anfangsbereich-Überholvorgangsereignis. Die ersten Fahrzeugidentifikationsdaten können aus den Überholverbotszoneneinfahrts-spezifische Bilddaten ermittelt werden, z. B. durch Analysieren eines Bild- oder Bewegtbildausschnitts, der ersten Fahrzeugidentifikationsdaten (z. B. ein Fahrzeugkennzeichen) enthält. Es sei betont, dass sich aus den Überholverbotszoneneinfahrts-spezifischen Bilddaten auch bei nicht durchgeführter automatischer Erkennung eines Anfangsbereich-Überholvorgangsereignis gleichwohl ein solches Ereignis feststellen lässt, sofern die entsprechenden Überholverbotszoneneinfahrts-spezifischen Bilddaten von an einem Anfangsbereich-Überholvorgangsereignis beteiligten Fahrzeugen herangezogen werden.

Es werden sodann nur im Falle der Erkennung eines Zwischenbereichs-Überholvorgangsereignisses jene Überholverbotszoneneinfahrts-spezifischen Bilddaten und erste Fahrzeugidentifikationsdaten von an dem Zwischenbereich-Überholvorgangsereignis beteiligten Fahrzeugen aus den mit der ersten optischen Erfassungseinheit erfassten und gespeicherten Bilddaten ausgewählt und gemäß f) zum Datenzugriff durch einen datenzugriffsberechtigten Nutzer und/oder zur Ausgabe eines Datenreports bereitgestellt. Der Datenreport kann - wie erwähnt - jene gemäß b) gespeicherten zweiten Überholvorgangs-spezifischen Bilddaten und die zweiten Fahrzeugidentifikationsdaten enthalten (also Beweismittel für das Vorliegen eines Zwischenbereich-Überholvorgangsereignisses in Bezug auf die beteiligten Fahrzeuge). Ferner kann der Datenreport Überholverbotszoneneinfahrts-spezifische Bilddaten sowie erste Fahrzeugidentifikationsdaten der am Zwischenbereich-Überholvorgangsereignis beteiligten Fahrzeuge enthalten. Auf Basis dieses Datenreports kann geprüft werden, ob sich die am Zwischenbereich-Überholvorgangsereignis beteiligten Fahrzeuge bereits bei Einfahrt in die Überholverbotszone in einem Überholvorgang befanden oder nicht. Derartige Informationen können von besonderer Relevanz zur rechtlichen Beurteilung von Verkehrsvergehen in Bezug auf Überholverbote sein. Denn das Missachten einer Überholverbotszone durch ein Fahrzeug, das nachweislich erst nach Einfahrt in eine Überholverbotszone zu einem Überholmanöver ansetzt (und ein anderes Fahrzeug überholt) wird (je nach gesetzlichen Vorgaben im Verkehrsrecht) verkehrsrechtlich möglicherweise strenger geahndet als ein Überholmanöver eines Fahrzeugs, dass sich schon vor Einfahrt der beteiligten Fahrzeuge in eine Überholverbotszone im Gange war, und welches nach Einfahrt der Fahrzeuge in die Überholverbotszone andauert und dort als Zwischenbereich-Überholvorgangsereignis erkannt wird. Denn möglicherweise war einem Fahrzeugführer des überholenden Fahrzeugs vor Einfahrt in die Überholverbotszone noch keine entsprechende Beschilderung betreffend den Beginn der Überholverbotszone zugänglich oder die Verkehrssituation hat kein Abbrechen oder Beenden des Überholmanövers vor Einfahrt in die Überholverbotszone erlaubt. Dies mag verkehrsrechtlich möglicherweise als weniger schwerwiegendes oder als kein Verkehrsvergehen bewertet werden, insbesondere im Vergleich zu einem eindeutig in der Überholverbotszone einsetzenden Überholmanöver.

Wie erwähnt wird gemäß dieser zweiten Verfahrensvariante auf Basis der gemäß b) gespeicherten zweiten Überholvorgangs-spezifischen Bilddaten und der zweiten Fahrzeugidentifikationsdaten eine Auswahl getroffen von gemäß a2) gespeicherten Überholverbotszoneneinfahrts-spezifischen Bilddaten und/oder ersten Fahrzeugidentifikationsdaten in Bezug auf zumindest ein Fahrzeug (7, 8), welches gemäß b) als an dem Zwischenbereich-Überholvorgangsereignis (11) beteiligt erkannt wurde. Diese Auswahl kann automatisch erfolgen. Insbesondere kann dies auf Basis eines Abgleichs von ausgewählten Vergleichsmerkmalen in den Überholverbotszoneneinfahrts-spezifischen Bilddaten und zweiten Überholvorgangs-spezifischen Bilddaten und/oder in den ersten und zweiten Fahrzeugidentifikationsdaten erfolgen. Entsprechend kann für jene an einem Zwischenbereichs-Überholvorgangsereignis beteiligten Fahrzeuge auch die Einfahrtsituation (Bilder, Bewegtbilder sowie weitere Informationen wie Geschwindigkeit, Beschleunigung etc.) in den Überholverbotszonen-Anfangsbereich für Beweiszwecke vor Gerichten oder Behörden ausgegeben werden. Entsprechend werden die ausgewählten Überholverbotszoneneinfahrts-spezifischen Bilddaten und/oder der ausgewählten ersten Fahrzeugidentifikationsdaten sowie die gemäß b) gespeicherten zweiten Überholvorgangs-spezifischen Bilddaten und zweiten Fahrzeugidentifikationsdaten zum Datenzugriff durch einen datenzugriffsberechtigten Nutzer und/oder zur Ausgabe eines Datenreports umfassend die bereitgestellten Daten.

Bei beiden Verfahrensvarianten kann es sich bei dem Datenreport um einen Datensatz, ein Datenprotokoll oder ähnliches handeln. Der Datenreport kann neben den erwähnten Daten auch Geschwindigkeitsangaben, Beschleunigungsangaben etc. der beteiligten Fahrzeuge umfassen. Der Datenreport kann Dateien (Bilddateien, Videodateien, etc.) umfassen. Der Datenreport kann mit einem Verschlüsselungscode versehen sein, der lediglich von einem datenzugriffsberechtigten Nutzer dekodiert werden kann. Ein datenzugriffsberechtigter Nutzer kann ein Mitarbeiter einer Behörde, eines Gerichts, der Polizei oder ein Gutachter sein. Diese Liste ist nicht abschließend.

Nachfolgend seien vorteilhafte Ausgestaltung der Erfindung beschrieben, unter anderem jene in den Unteransprüchen angegebenen Merkmale der Erfindung. Auch können nachfolgend weitere - in den Unteransprüchen nicht angegebene - Ausgestaltungen bzw. Merkmale der Erfindung beschrieben sein. Sämtliche der in den Unteransprüchen und der nachfolgend beschriebenen weiteren Ausgestaltungen bzw. Merkmale können die Erfindung über Katerogiegrenzen hinweg spezifizieren. So können jene im Zusammenhang des mit der Erfindung vorgeschlagenen Verfahrens genannten Ausgestaltungen bzw. Merkmale ohne Weiteres auch Ausgestaltungen bzw. Merkmale des mit der Erfindung vorgeschlagenen Systems darstellen und umgekehrt. Gleiches gilt für weitere Anspruchskategorien, die an dieser Stelle nicht genannt seien (z. B. eine Verwendung).

Nach einer ersten Ausgestaltung der Erfindung kann vorgesehen sein, dass die erste optische Erfassungseinheit sowie die zumindest eine zweite optische Erfassungseinheit Kameraeinheiten sind. Wie erwähnt, können auch mehrere zweite optische Erfassungseinheiten vorgesehen sein, die jeweils Kameraeinheiten sind. Die erste und zumindest eine zweite optische Erfassungseinheit könne jeweils aus mehreren untergeordneten optischen Messeinheiten zusammengesetzt sein, die ebenfalls Kameraeinheiten sein können. Kameraeinheiten können Gerätschaften zur Aufnahme von statischen Bildern (2D, 3D) oder von Bewegtbildern (2D, 3D) sein. Unter Bewegtbildern können über einen bestimmten Zeitraum ablaufende Bildfolgen verstanden werden, also beispielsweise Videoaufnahmen. Die erwähnten Kameraeinheiten können zudem zur Erfassung oder Ermittlung von Fahrzeuggeschwindigkeiten oder Beschleunigungen verwendet werden. Ferner können die erwähnten optischen Erfassungseinheiten nebst der erwähnten Kameraeinheiten zusätzliche Mittel zur Geschwindigkeitsmessung oder Beschleunigungsmessung aufweisen, beispielsweise zusätzliche Messinstrumente.

Nach einer weiteren Ausgestaltung des vorschlagsgemäßen Verfahrens kann vorgesehen sein, dass mehrere zweite optische Erfassungseinheiten eingesetzt werden, die entlang des Überholverbotszonen-Zwischenbereichs verteilt und zueinander beabstandet angeordnet sind. Damit wird eine zuverlässige Erkennung von Zwischenbereich-Überholvorgangsereignissen über die gesamte Länge des Zwischenabschnitts (also über die gesamte Länge der Überholverbotszone) gewährleistet. Die Anzahl der erforderlichen zweiten optischen Erfassungseinheiten kann je nach Länge der Überholverbotszone und des Erfassungsbereichs (Field of View) der zweiten optischen Erfassungseinheiten variieren. Ein weiteres Kriterium für die Anzahl der eingesetzten zweiten optischen Erfassungseinheiten ist die gewünschte Überwachungsdichte entlang der Überholverbotszone. Vorteilhaft ist es, die Anzahl der zweiten optischen Überwachungseinheiten derart auszuwählen, dass eine lückenlose Überwachung von Zwischenbereich-Überholvorgangsereignissen entlang der Überholverbotszone eröffnet ist. Entsprechend ist es nach einer weiteren Ausgestaltung des vorschlagsgemäßen Verfahrens vorteilhaft, dass die zweiten optischen Erfassungseinheiten derart entlang des Überholverbotszonen-Zwischenbereichs verteilt sind, dass über die gesamte Länge des Überholverbotszonen-Zwischenbereichs Zwischenbereich-Überholvorgangsereignisse erkannt werden können. Damit ist eine sichere Erfassung von Überholverbotsvergehen entlang des Zwischenbereichs gewährleistet.

Nach einer weiteren Ausgestaltung des vorschlagsgemäßen Verfahrens kann vorgesehen sein, dass die ersten Überholvorgangs-spezifischen Bilddaten, die zweiten Überholvorgangs-spezifischen Bilddaten, und/oder die Überholverbotszoneneinfahrts-spezifische Bilddaten statische Bildaufnahmen oder Bewegtbildaufnahmen sind. Statische Bildaufnahmen können als Fotografien verstanden werden, Bewegtbildaufnahmen als Videoaufnahmen. Die ersten Überholvorgangs-spezifischen Bilddaten, die zweiten Überholvorgangs-spezifischen Bilddaten und/oder die Überholverbotszoneneinfahrts-spezifischen Bilddaten können ein oder mehrere statische Bildaufnahmen oder Bewegtbildaufnahmen umfassen.

Nach einer weiteren Ausgestaltung des vorschlagsgemäßen Verfahrens kann vorgesehen sein, dass die ersten Fahrzeugidentifikationsdaten aus den ersten Überholvorgangs-spezifischen Bilddaten oder den Überholverbotszoneneinfahrts-spezifische Bilddaten ermittelt werden, und dass die zweiten Fahrzeugidentifikationsdaten aus den zweiten Überholvorgangs-spezifischen Bilddaten ermittelt werden. Handelt es sich beispielsweise bei den ersten Überholvorgangs-spezifischen Bilddaten oder den Überholverbotszoneneinfahrts-spezifische Bilddaten um statische Bildaufnahmen oder Bewegtbildaufnahmen, so können charakteristische Ausschnitte der Bildaufnahme in Bezug auf das Vorliegen von Fahrzeugidentifikationsdaten geprüft und diese gegebenenfalls ausgelesen werden. Dazu können charakteristische Bereiche eines Fahrzeugs, in denen typischerweise Fahrzeugidentifikationsinformationen angeordnet sind, auch in den Bildaufnahmen auf das Vorliegen von Fahrzeugidentifikationsdaten geprüft werden. Dies kann unter Einsatz einer Software, eines Algorithmus (auch auf Basis künstlicher Intelligenz), einer Routine oder manuell erfolgen. Bei Einsatz einer Software, eines Algorithmus (auch auf Basis künstlicher Intelligenz) oder einer Routine wird dies vorzugsweise von einer Datenverarbeitungseinheit (z. B. einer Recheneinheit) ausgeführt.

Nach einer weiteren Ausgestaltung des vorschlagsgemäßen Verfahrens kann vorgesehen sein, dass die ersten Überholvorgangs-spezifischen Bilddaten respektive die Überholverbotszoneneinfahrts-spezifischen Bilddaten und die ersten Fahrzeugidentifikationsdaten in einer datenkommunikationstechnisch mit der ersten optischen Erfassungseinheit verbundenen ersten Speichereinheit gespeichert werden, und dass die zweiten Überholvorgangs-spezifischen Bilddaten und die zweiten Fahrzeugidentifikationsdaten in einer datenkommunikationstechnisch mit der zweiten optischen Erfassungseinheit verbundenen zweiten Speichereinheit gespeichert werden. Datenkommunikationstechnische Verbindungen können - wie eingangs erwähnt - kabelgebunden oder kabellos ausgeführt sein. Beispiele für kabellose Verbindungen sind Funk, mobile Internetverbindungen, WLAN, Bluetooth etc. Die erste und zweite Speichereinheit können jeweils oder gemeinsam Teil einer Datenverarbeitungseinheit (z. B. eines Rechners oder Servers) sein, gleichsam aber auch Online-Datenspeicherräume wie Datenspeicher-Clouds.

Nach einer weiteren Ausgestaltung des vorschlagsgemäßen Verfahrens kann vorgesehen sein, dass die erste Speichereinheit und die zweite Speichereinheit separate Speichereinheiten sind, oder dass die erste Speichereinheit und zweite Speichereinheit in einer gemeinsamen Speichereinheit zusammengefasst sind. Die erste Speichereinheit und zweite Speichereinheit können in ein und derselben Speichereinheit verwirklicht sein, wobei in diesem Fall die erste und Speichereinheit unterschiedliche Speicher-Ordner betreffen können, also Sub-Speicherstrukturen oder Sub-Speichereinheiten. Dies kann sowohl in einer Datenverarbeitungseinheit (z. B. Rechner, Server) verwirklicht sein, jedoch auch in einem Online-Datenspeicherraume wie einer Datenspeicher-Cloud.

Nach einer weiteren Ausgestaltung des vorschlagsgemäßen Verfahrens kann vorgesehen sein, dass die ersten Überholvorgangs-spezifischen Bilddaten respektive die Überholverbotszoneneinfahrts-spezifischen Bilddaten und die ersten Fahrzeugidentifikationsdaten über einen ersten vorgebbaren Zeitraum in der ersten Speichereinheit gespeichert werden, und dass die zweiten Überholvorgangs-spezifischen Bilddaten und die zweiten Fahrzeugidentifikationsdaten über einen zweiten vorgebbaren Zeitraum in der zweiten Speichereinheit gespeichert werden. Der erste und zweite vorgebbare Zeitraum kann einstellbar sein. Nach Ablauf des ersten und/oder zweiten vorgebbaren Zeitraums kann eine automatische Löschung oder Selbstzerstörung der ersten Überholvorgangs-spezifischen Bilddaten, der Überholverbotszoneneinfahrts-spezifischen Bilddaten und der ersten Fahrzeugidentifikationsdaten ausgeführt werden. Hierdurch wird einerseits die Datenmenge reduziert, andererseits können damit etwaige Datenschutzbestimmungen eingehalten werden, die ein zu lange andauerndes Speichern von Daten möglicherweise verbieten.

Nach einer weiteren Ausgestaltung des vorschlagsgemäßen Verfahrens kann vorgesehen sein, dass die erste Speichereinheit und die zweite Speichereinheit als gemeinsame Backend-Speichereinheit ausgebildet sind. Das Backend kann in einer Datenverarbeitungseinheit ausgebildet sein, wobei diese Datenverarbeitungseinheit Schnittstellen zur Datenkommunikation aufweist, um die erwähnten datenkommunikationstechnischen Verbindungen zwischen der ersten optischen Erfassungseinheit, der zumindest einen zweiten optischen Erfassungseinheit und den jeweiligen Speichereinheiten oder der gemeinsamen Speichereinheit zu gewährleisten.

Nach einer weiteren Ausgestaltung des vorschlagsgemäßen Verfahrens kann vorgesehen sein, dass bei der ersten Verfahrensvariante im Falle einer Beteiligung derselben Fahrzeuge am Anfangsbereich-Überholvorgangsereignis und Zwischenbereich-Überholvorgangsereignis die gespeicherten ersten Überholvorgangs-spezifischen Bilddaten, die gespeicherten zweiten Überholvorgangs-spezifischen Bilddaten, die gespeicherten ersten Fahrzeugidentifikationsdaten und die gespeicherten zweiten Fahrzeugidentifikationsdaten gelöscht werden. Damit wird gewährleistet, dass keine unnötigen Daten gespeichert und aufbewahrt werden müssen, was die Datensicherheit und den Datenschutz verbessert.

Nach einer weiteren Ausgestaltung des vorschlagsgemäßen Verfahrens kann vorgesehen sein, dass die ersten und zweiten Fahrzeugidentifikationsdaten eine Identifikation eines Fahrzeughalters, eines Fahrzeugführers oder eines Fahrzeuginhabers durch Datenbankabgleich ermöglichen. Unter einem Fahrzeughalter oder Fahrzeuginhaber ist nicht zwingend eine Privatperson zu verstehen, vielmehr kann dies auch ein Betreiber einer Fahrzeugvermietung, ein Unternehmen, ein Car-Sharing-Anbieter, ein Logistikunternehmen etc. sein.

Nach einer weiteren Ausgestaltung des vorschlagsgemäßen Verfahrens kann vorgesehen sein, dass die ersten und/oder zweiten Fahrzeugidentifikationsdaten ein Fahrzeugidentifikationsmerkmal wie ein Fahrzeugkennzeichen, einen Identifikationscode, oder eine Identifikationsmarke betreffen. Zur Erkennung eignen sich Fahrzeugidentifikationsmerkmale, die von fahrzeugaußen erkennbar sind.

Nach einer weiteren Ausgestaltung des vorschlagsgemäßen Verfahrens kann vorgesehen sein, dass das Verfahren zur Erkennung von unerlaubten LKW, PKW oder Zweirad-Überholvorgängen eingerichtet ist.

Die der Erfindung zugrunde liegende Aufgabe wird zudem gelöst durch ein System zur Ausführung eines erfindungsgemäßen Verfahrens, wobei das System zur Erkennung von unerlaubten Fahrzeug-Überholvorgängen in einer Überholverbotszone eines Fahrwegs eingerichtet ist, wobei sich die Überholverbotszone entlang eines Wegabschnitts des Fahrwegs ausgehend von einem Überholverbotszonen-Anfangsbereich bis zu einem Überholverbotszonen-Endbereich erstreckt, wobei zwischen dem Überholverbotszonen-Anfangsbereich und dem Überholverbotszonen-Endbereich ein Überholverbotszonen-Zwischenbereich vorliegt, wobei ausgehend von dem Überholverbotszonen-Anfangsbereich in Richtung des Überholverbotszonen-Endbereichs entlang des Fahrwegs nacheinander eine von dem System umfasste erste optische Erfassungseinheit sowie zumindest eine von dem System umfasste zweite optische Erfassungseinheit angeordnet ist.

Merkmale, Vorteile und Eigenschaften der vorschlagsgemäßen Systems entsprechen den Merkmalen, Vorteilen und Eigenschaften des vorschlagsgemäßen Verfahrens und umgekehrt.

Weitere Einzelheiten, Merkmale, Ziele und Vorteile der vorliegenden Erfindung werden nachfolgend anhand der nur Ausführungsbeispiele wiedergebenden Zeichnungen erläutert. In den Zeichnungen zeigen
- Fig. 1: eine schematische Darstellung des Einsatzgebietes der vorliegenden Erfindung, insbesondere die Erkennung eines Anfangsbereich-Überholvorgangsereignis in einer Überholverbotszone;
- Fig. 2: eine schematische Darstellung des Einsatzgebietes der vorliegenden Erfindung, insbesondere die Erkennung eines Zwischenbereichs-Überholvorgangsereignis in einer Überholverbotszone;
- Fig. 3: eine schematische Darstellung eines abgeschlossenen Überholvorgangs in einer Überholverbotszone;
- Fig. 4: eine schematische Darstellung eines Fahrzeugs vor der Einfahrt in den Überholverbotszonen-Anfangsbereich;
- Fig. 5: eine schematische Übersichtsdarstellung der Komponenten zur Ausführung der Erfindung.
- Fig. 6: die Darstellung nach Fig. 5, allerdings für eine dreispurige Fahrbahn.

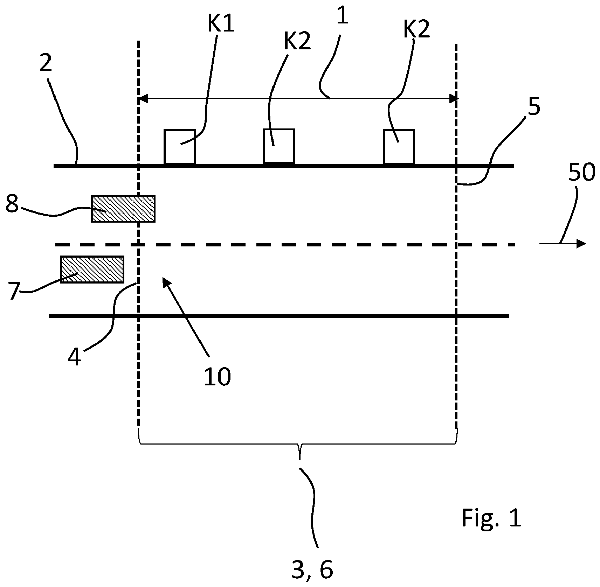

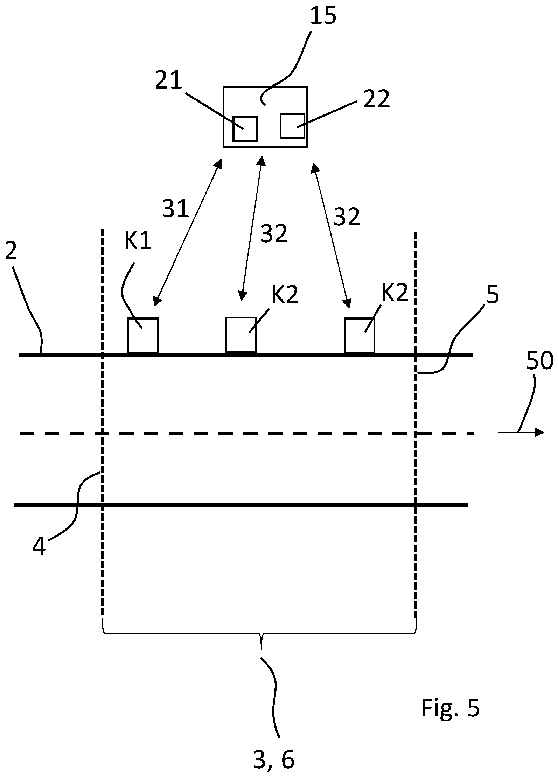

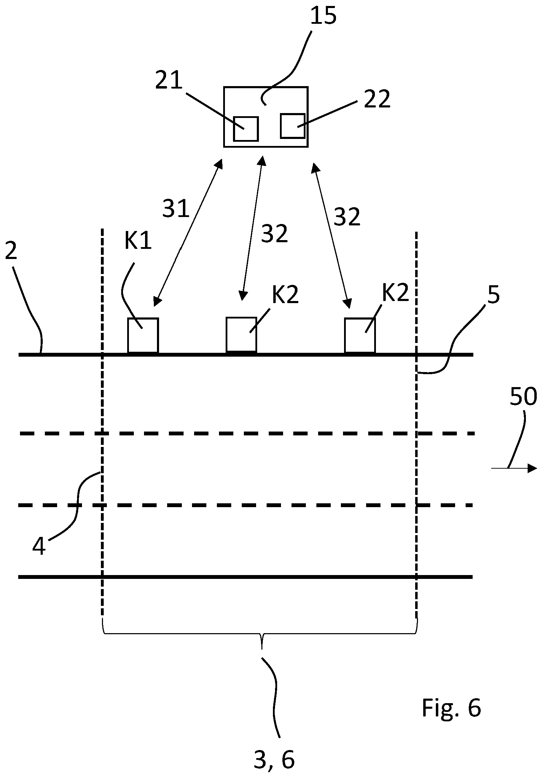

Grundsätzlich betrifft die Erfindung ein Verfahren zur Erkennung von unerlaubten Fahrzeug-Überholvorgängen in einer Überholverbotszone 1 eines Fahrwegs 2. Eine solche Überholverbotszone ist in den Figuren 1 bis 5 anhand eines zweispurigen Fahrwegs 2 dargestellt, wobei beide Fahrspuren in die gleiche Fahrtrichtung 50 verlaufen. Figur 6 zeigt die Darstellung nach Figur 5 für eine dreispurige Fahrbahn mit Fahrtrichtung 50. Die vorliegende Erfindung ist nicht auf eine bestimmte Anzahl von Fahrspuren begrenzt. Auch kann die Erfindung bei Fahrspuren mit gegenläufiger Fahrtrichtung eingesetzt werden. Die Überholverbotszone 1 erstreckt sich entlang eines Wegabschnitts 3 des Fahrwegs 2 ausgehend von einem Überholverbotszonen-Anfangsbereich 4 bis zu einem Überholverbotszonen-Endbereich 5. Zwischen dem Überholverbotszonen-Anfangsbereich 4 und dem Überholverbotszonen-Endbereich 5 liegt ein Überholverbotszonen-Zwischenbereich 6 vor, wobei ausgehend von dem Überholverbotszonen-Anfangsbereich 4 in Richtung des Überholverbotszonen-Endbereichs 5 entlang des Fahrwegs 2 nacheinander eine erste optische Erfassungseinheit K1 sowie zumindest eine zweite optische Erfassungseinheit K2 angeordnet ist. Vorliegend sind zwei zweite optische Erfassungseinheiten K2 dargestellt.

Mit der ersten optischen Erfassungseinheit K1 wird a1) ein im Überholverbotszonen-Anfangsbereich 4 stattfindendes Anfangsbereich-Überholvorgangsereignis 10 zwischen Fahrzeugen 7, 8 erkannt (ein solches Ereignis ist in Fig. 1 dargestellt, in welcher das Fahrzeug 8 das Fahrzeug 9 bei Rechtsfahrgebot auf einer zweiten Fahrbahn überholt). Die Erkennung erfolgt durch Erfassen von ersten Überholvorgangs-spezifischen Bilddaten durch die erste optische Erfassungseinheit K1 und Prüfen der ersten Überholvorgangs-spezifischen Bilddaten auf tatsächliches Vorliegen des Anfangsbereich-Überholvorgangsereignisses 10, wobei im Falle eines bei der Prüfung festgestellten tatsächlichen Vorliegens des Anfangsbereich-Überholvorgangsereignisses 10 die ersten Überholvorgangs-spezifischen Bilddaten und durch die erste optische Erfassungseinheit K1 erfasste erste Fahrzeugidentifikationsdaten der Fahrzeuge 7, 8 gespeichert werden.

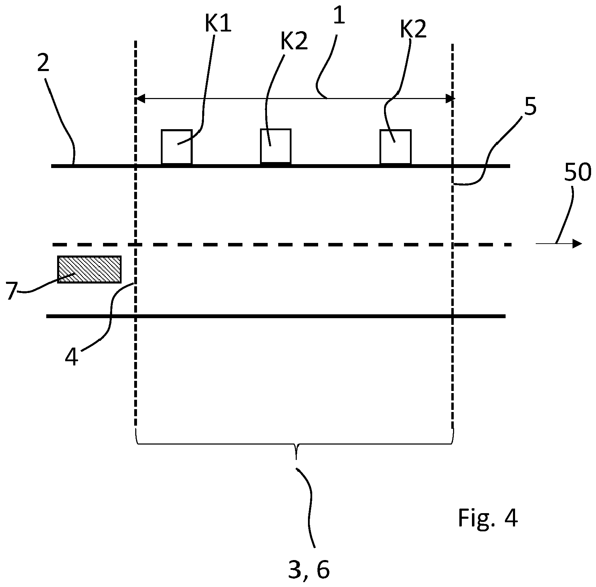

Alternativ können mit der ersten optischen Erfassungseinheit K1 a2) Überholverbotszoneneinfahrts-spezifische Bilddaten und erste Fahrzeugidentifikationsdaten sämtlicher in die Überholverbotszone einfahrender Fahrzeuge (7, 8) erfasst und gespeichert werden. Beispielsweise kann dies ein nicht überholtes, und nicht überholendes Fahrzeug 7 betreffen, wie es in Figur 4 dargestellt ist.

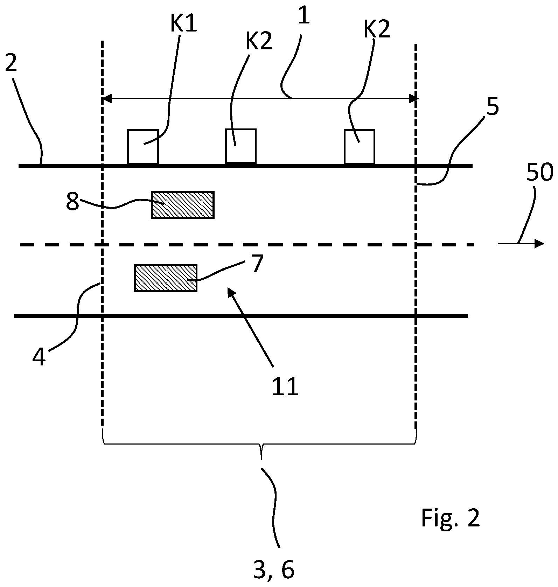

In einem Schritt b) wird mit der zumindest einen zweiten optischen Erfassungseinheit K2 ein in dem Überholverbotszonen-Zwischenbereich 6 stattfindendes Zwischenbereich-Überholvorgangsereignis 11 zwischen Fahrzeugen 7, 8 erkannt (ein solches Ereignis ist in der Figur 2 dargestellt (Fahrzeug 8 überholt Fahrzeug 7), nämlich durch Erfassen von zweiten Überholvorgangs-spezifischen Bilddaten durch die zumindest eine zweite optische Erfassungseinheit K2 und Prüfen der zweiten Überholvorgangs-spezifischen Bilddaten auf tatsächliches Vorliegen des Zwischenbereich-Überholvorgangsereignisses 11, wobei im Falle eines bei der Prüfung festgestellten tatsächlichen Vorliegens des Zwischenbereich-Überholvorgangsereignisses 11 die zweiten Überholvorgangs-spezifischen Bilddaten und durch die zumindest eine zweite optische Erfassungseinheit K2 erfasste zweite Fahrzeugidentifikationsdaten der Fahrzeuge 7, 8 gespeichert werden.

Sodann werden gemäß einer ersten Verfahrensvariante folgende Schritte ausgeführt:
Auf Basis der in Schritt a1) und b) gespeicherten Daten: Feststellen ob bei dem Anfangsbereich-Überholvorgangsereignis 10 und dem Zwischenbereich-Überholvorgangsereignis 11 dieselben oder verschiedene Fahrzeuge (7, 8) beteiligt waren. Im Falle einer Beteiligung verschiedener Fahrzeuge 7, 8 am Anfangsbereich-Überholvorgangsereignis 10 und Zwischenbereich-Überholvorgangsereignis 11: Bereitstellen zumindest der zweiten Überholvorgangs-spezifischen Bilddaten und zumindest der zweiten Fahrzeugidentifikationsdaten zum Datenzugriff durch einen datenzugriffsberechtigen Nutzer und/oder Ausgeben eines Datenreports umfassend die bereitgestellten Daten.

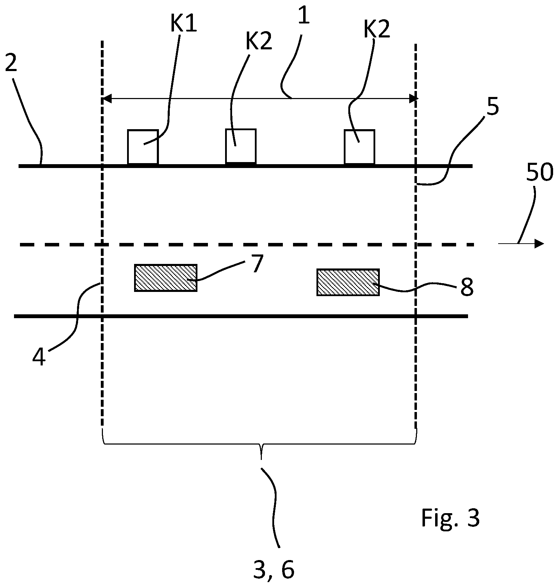

Figur 3 zeigt einen bereits abgeschlossenen Überholvorgang, bei dem das Fahrzeug 8 das Fahrzeug 7 überholt hat und wieder auf die rechte Fahrspur gewechselt ist.

Gemäß einer zweiten Verfahrensvariante werden anstelle der vorangehend beschriebenen Schritte folgende Schritte ausgeführt werden:
Auf Basis der gemäß b) gespeicherten zweiten Überholvorgangs-spezifischen Bilddaten und der zweiten Fahrzeugidentifikationsdaten: Auswählen von gemäß a2) gespeicherten Überholverbotszoneneinfahrts-spezifischen Bilddaten und/oder ersten Fahrzeugidentifikationsdaten in Bezug auf zumindest ein Fahrzeug 7, 8, welches gemäß b) als an dem Zwischenbereich-Überholvorgangsereignis 11 beteiligt erkannt wurde. Bereitstellen der ausgewählten Überholverbotszoneneinfahrts-spezifischen Bilddaten und/oder der ausgewählten ersten Fahrzeugidentifikationsdaten sowie der gemäß b) gespeicherten zweiten Überholvorgangs-spezifischen Bilddaten und der zweiten Fahrzeugidentifikationsdaten zum Datenzugriff durch einen datenzugriffsberechtigten Nutzer und/oder zur Ausgabe eines Datenreports umfassend die bereitgestellten Daten.

Grundsätzlich sei bemerkt, dass die von der ersten optischen Erfassungseinheit K1 und der zumindest einen zweiten optischen Erfassungseinheit K2 erfassten Daten in einer gemeinsamen Speichereinheit 15 gespeichert werden können. Die gemeinsame Speichereinheit 15 kann eine erste und zweite Speichereinheit 21, 22 umfassen, die mit der ersten optischen Erfassungseinheit K1 respektive zweiten optischen Erfassungseinheit K2 über Datenkommunikationsverbindungen 31, 32 verbunden sind. In sämtlichen Figuren ist die Fahrtrichtung mit dem Bezugszeichen 50 angegeben.

Die erste optische Erfassungseinheit K1 und die zweiten optischen Erfassungseinheiten K2 sind in den dargestellten Figuren 1 bis 6 seitlich des Fahrwegs 2 angeordnet. Ohne weiteres kann die erste optische Erfassungseinheit K1 und die zweiten optischen Erfassungseinheiten K2 beidseits des Fahrwegs 2 angeordnet werden, beispielsweise in jenem Fall, dass die jeweiligen Erfassungseinheiten K1, K2 jeweils aus mehreren optischen Messeinheiten ausgebildet sind. Auch eine Anordnung oberhalb des Fahrwegs kommt in Betracht. Ferner kommt eine Anordnung zwischen einzelnen Fahrspuren (gleichgerichtet oder gegengerichtet) in Betracht, sofern dort Möglichkeiten zur Anordnung (z. B. ein Grünstreifen) vorgesehen sind.

### Bezugszeichenliste

1 Überholverbotszone
2 Fahrweg
3 Wegabschnitt
4 Überholverbotszonen-Anfangsbereich
5 Überholverbotszonen-Endbereich
6 Überholverbotszonen-Zwischenbereich
7 Fahrzeug
8 Fahrzeug
10 Anfangsbereich-Überholvorgangsereignis
11 Zwischenbereich-Überholvorgangsereignis
15 gemeinsame Speichereinheit
21 erste Speichereinheit
22 zweite speichereinheit
50 Fahrtrichtung
31 Datenkommunikationsverbindung
32 Datenkommunikationsverbindung
50 Fahrtrichtung
K1 erste optische Erfassungseinheit
K2 zweite optische Erfassungseinheit

## Patentansprüche

1. Verfahren zur Erkennung von unerlaubten Fahrzeug-Überholvorgängen in einer Überholverbotszone (1) eines Fahrwegs (2), wobei sich die Überholverbotszone (1) entlang eines Wegabschnitts (3) des Fahrwegs (2) ausgehend von einem Überholverbotszonen-Anfangsbereich (4) bis zu einem Überholverbotszonen-Endbereich (5) erstreckt, wobei zwischen dem Überholverbotszonen-Anfangsbereich (4) und dem Überholverbotszonen-Endbereich (5) ein Überholverbotszonen-Zwischenbereich (6) vorliegt, wobei ausgehend von dem Überholverbotszonen-Anfangsbereich (4) in Richtung des Überholverbotszonen-Endbereichs (5) entlang des Fahrwegs (2) nacheinander eine erste optische Erfassungseinheit (K1) sowie zumindest eine zweite optische Erfassungseinheit (K2) angeordnet ist, wobei
c) mit der ersten optischen Erfassungseinheit (K1)
a1) ein im Überholverbotszonen-Anfangsbereich (4) stattfindendes Anfangsbereich-Überholvorgangsereignis (10) zwischen Fahrzeugen (7, 8) erkannt wird, nämlich durch Erfassen von ersten Überholvorgangs-spezifischen Bilddaten durch die erste optische Erfassungseinheit (K1) und Prüfen der ersten Überholvorgangs-spezifischen Bilddaten auf tatsächliches Vorliegen des Anfangsbereich-Überholvorgangsereignisses (10), wobei im Falle eines bei der Prüfung festgestellten tatsächlichen Vorliegens des Anfangsbereich-Überholvorgangsereignisses (10) die ersten Überholvorgangs-spezifischen Bilddaten und durch die erste optische Erfassungseinheit (K1) erfasste erste Fahrzeugidentifikationsdaten der Fahrzeuge (7, 8) gespeichert werden, oder
a2) Überholverbotszoneneinfahrts-spezifische Bilddaten und erste Fahrzeugidentifikationsdaten sämtlicher in die Überholverbotszone einfahrender Fahrzeuge (7, 8) erfasst und gespeichert werden
d) mit der zumindest einen zweiten optischen Erfassungseinheit (K2) ein in dem Überholverbotszonen-Zwischenbereich (6) stattfindendes Zwischenbereich-Überholvorgangsereignis (11) zwischen Fahrzeugen (7, 8) erkannt wird, nämlich durch Erfassen von zweiten Überholvorgangs-spezifischen Bilddaten durch die zumindest eine zweite optische Erfassungseinheit (K2) und Prüfen der zweiten Überholvorgangs-spezifischen Bilddaten auf tatsächliches Vorliegen des Zwischenbereich-Überholvorgangsereignisses (11), wobei im Falle eines bei der Prüfung festgestellten tatsächlichen Vorliegens des Zwischenbereich-Überholvorgangsereignisses (11) die zweiten Überholvorgangs-spezifischen Bilddaten und durch die zumindest eine zweite optische Erfassungseinheit (K2) erfasste zweite Fahrzeugidentifikationsdaten der Fahrzeuge (7, 8) gespeichert werden;
wobei sodann gemäß einer ersten Verfahrensvariante folgende Schritte ausgeführt werden:
c) auf Basis der in Schritt a1) und b) gespeicherten Daten: Feststellen ob bei dem Anfangsbereich-Überholvorgangsereignis (10) und dem Zwischenbereich-Überholvorgangsereignis (11) dieselben oder verschiedene Fahrzeuge (7, 8) beteiligt waren;
d) im Falle einer Beteiligung verschiedener Fahrzeuge (7, 8) am Anfangsbereich-Überholvorgangsereignis (10) und Zwischenbereich-Überholvorgangsereignis (11): Bereitstellen zumindest der zweiten Überholvorgangs-spezifischen Bilddaten und zumindest der zweiten Fahrzeugidentifikationsdaten zum Datenzugriff durch einen datenzugriffsberechtigen Nutzer und/oder Ausgeben eines Datenreports umfassend die bereitgestellten Daten;
oder wobei gemäß einer zweiten Verfahrensvariante anstelle der Schritte c) und d) folgende Schritte ausgeführt werden:
e) auf Basis der gemäß b) gespeicherten zweiten Überholvorgangs-spezifischen Bilddaten und der zweiten Fahrzeugidentifikationsdaten: Auswählen von gemäß a2) gespeicherten Überholverbotszoneneinfahrts-spezifischen Bilddaten und/oder ersten Fahrzeugidentifikationsdaten in Bezug auf zumindest ein Fahrzeug (7, 8), welches gemäß b) als an dem Zwischenbereich-Überholvorgangsereignis (11) beteiligt erkannt wurde,
f) Bereitstellen der gemäß e) ausgewählten Überholverbotszoneneinfahrts-spezifischen Bilddaten und/oder der ausgewählten ersten Fahrzeugidentifikationsdaten sowie der gemäß b) gespeicherten zweiten Überholvorgangs-spezifischen Bilddaten und der zweiten Fahrzeugidentifikationsdaten zum Datenzugriff durch einen datenzugriffsberechtigten Nutzer und/oder zur Ausgabe eines Datenreports umfassend die bereitgestellten Daten.

2. Verfahren nach Anspruch 1, **dadurch gekennzeichnet, dass** die erste optische Erfassungseinheit (K1) sowie die zumindest eine zweite optische Erfassungseinheit (K2) Kameraeinheiten sind.

3. Verfahren nach Anspruch 2, **dadurch gekennzeichnet, dass** mehrere zweite optische Erfassungseinheiten (K2) eingesetzt werden, die entlang des Überholverbotszonen-Zwischenbereichs (6) verteilt und zueinander beabstandet angeordnet sind.

4. Verfahren nach Anspruch 3, **dadurch gekennzeichnet, dass** die zweiten optischen Erfassungseinheiten (K2) derart entlang des Überholverbotszonen-Zwischenbereichs (6) verteilt sind, dass über die gesamte Länge des Überholverbotszonen-Zwischenbereichs (6) Zwischenbereich-Überholvorgangsereignisse (11) erkannt werden können.

5. Verfahren nach einem der vorangehenden Ansprüche, **dadurch gekennzeichnet, dass** die ersten Überholvorgangs-spezifischen Bilddaten, die zweiten Überholvorgangs-spezifischen Bilddaten, und/oder die Überholverbotszoneneinfahrts-spezifische Bilddaten statische Bildaufnahmen oder Bewegtbildaufnahmen sind.

6. Verfahren nach einem der vorangehenden Ansprüche, **dadurch gekennzeichnet, dass** die ersten Fahrzeugidentifikationsdaten aus den ersten Überholvorgangs-spezifischen Bilddaten oder den Überholverbotszoneneinfahrts-spezifische Bilddaten ermittelt werden, und dass die zweiten Fahrzeugidentifikationsdaten aus den zweiten Überholvorgangs-spezifischen Bilddaten ermittelt werden.

7. Verfahren nach einem der vorangehenden Ansprüche, **dadurch gekennzeichnet, dass** die ersten Überholvorgangs-spezifischen Bilddaten respektive die Überholverbotszoneneinfahrts-spezifischen Bilddaten und die ersten Fahrzeugidentifikationsdaten in einer datenkommunikationstechnisch mit der ersten optischen Erfassungseinheit (K1) verbundenen ersten Speichereinheit (21) gespeichert werden, und dass die zweiten Überholvorgangs-spezifischen Bilddaten und die zweiten Fahrzeugidentifikationsdaten in einer datenkommunikationstechnisch mit der zweiten optischen Erfassungseinheit (K2) verbundenen zweiten Speichereinheit (22) gespeichert werden.

8. Verfahren nach Anspruch 7, **dadurch gekennzeichnet, dass** die erste Speichereinheit (21) und die zweite Speichereinheit (22) separate Speichereinheiten sind, oder dass die erste Speichereinheit (21) und zweite Speichereinheit (22) in einer gemeinsamen Speichereinheit (15) zusammengefasst sind.

9. Verfahren nach einem der vorangehenden Ansprüche, **dadurch gekennzeichnet, dass** die ersten Überholvorgangs-spezifischen Bilddaten respektive die Überholverbotszoneneinfahrts-spezifischen Bilddaten und die ersten Fahrzeugidentifikationsdaten über einen ersten vorgebbaren Zeitraum in der ersten Speichereinheit (21) gespeichert werden, und dass die zweiten Überholvorgangs-spezifischen Bilddaten und die zweiten Fahrzeugidentifikationsdaten über einen zweiten vorgebbaren Zeitraum in der zweiten Speichereinheit (22) gespeichert werden.

10. Verfahren nach Anspruch 8 oder 9, **dadurch gekennzeichnet, dass** die erste Speichereinheit (21) und die zweite Speichereinheit (22) als gemeinsame Backend-Speichereinheit ausgebildet sind.

11. Verfahren nach Anspruch 1, **dadurch gekennzeichnet, dass** bei der ersten Verfahrensvariante im Falle einer Beteiligung derselben Fahrzeuge (7, 8) am Anfangsbereich-Überholvorgangsereignis (10) und Zwischenbereich-Überholvorgangsereignis (11) die gespeicherten ersten Überholvorgangs-spezifischen Bilddaten, die gespeicherten zweiten Überholvorgangs-spezifischen Bilddaten, die gespeicherten ersten Fahrzeugidentifikationsdaten und die gespeicherten zweiten Fahrzeugidentifikationsdaten gelöscht werden.

12. Verfahren nach einem der vorangehenden Ansprüche, **dadurch gekennzeichnet, dass** die ersten und zweiten Fahrzeugidentifikationsdaten eine Identifikation eines Fahrzeughalters, eines Fahrzeugführers oder eines Fahrzeuginhabers durch Datenbankabgleich ermöglichen.

13. Verfahren nach einem der vorangehenden Ansprüche, **dadurch gekennzeichnet, dass** die ersten und/oder zweiten Fahrzeugidentifikationsdaten ein Fahrzeugidentifikationsmerkmal wie ein Fahrzeugkennzeichen, einen Identifikationscode, oder eine Identifikationsmarke betreffen.

14. Verfahren nach einem der vorangehenden Ansprüche, **dadurch gekennzeichnet, dass** das Verfahren zur Erkennung von unerlaubten LKW, PKW oder Zweirad-Überholvorgängen eingerichtet ist.

15. System zur Ausführung eines Verfahrens nach einem der Ansprüche 1 bis 14, wobei das System zur Erkennung von unerlaubten Fahrzeug-Überholvorgängen in einer Überholverbotszone (1) eines Fahrwegs (2) eingerichtet ist, wobei sich die Überholverbotszone (1) entlang eines Wegabschnitts (3) des Fahrwegs (2) ausgehend von einem Überholverbotszonen-Anfangsbereich (4) bis zu einem Überholverbotszonen-Endbereich (5) erstreckt, wobei zwischen dem Überholverbotszonen-Anfangsbereich (4) und dem Überholverbotszonen-Endbereich (5) ein Überholverbotszonen-Zwischenbereich (6) vorliegt, wobei ausgehend von dem Überholverbotszonen-Anfangsbereich (4) in Richtung des Überholverbotszonen-Endbereichs (5) entlang des Fahrwegs (2) nacheinander eine von dem System umfasste erste optische Erfassungseinheit (K1) sowie zumindest eine von dem System umfasste zweite optische Erfassungseinheit (K2) angeordnet ist.
